# EUROPEAN PATENT APPLICATION

(11) **EP 1 533 044 A1**
(43) Date of publication of application: **25.05.2005**
(21) Application number: 04078015.7
(22) Date of filing: 02.11.2004
(51) Int. Cl.: B05D 7/14

(54) **Reinforced members formed with absorbent media**

(30) Priority: 03.11.2003 US 516922 P; 25.10.2004 US 973050
(71) Applicant: L & L Products Inc., Romeo, MI 48065 (US)
(72) Inventor: Larsen, Douglas C., Highland, Michigan 48357 (US)
(74) Representative: Bawden, Peter Charles

(57) **Abstract**

A method of reinforcing a member (32) using an absorbent medium or material (e.g., a layer 30 of absorbent medium) and a reinforced member (54) formed thereby are disclosed. Preferably, the absorbent medium absorbs a liquid material that cures to form a matrix material (50) and the matrix material (50) is employed to reinforce the member (32).

## Description

### CLAIM OF BENEFIT OF FILING DATE

The present application claims the benefit of the filing date of U.S. Provisional Application Serial No. 60/516,922, filed November 3, 2003 and U.S. Application Serial No. to be assigned (attorney docket no. 1001-150), filed October 25, 2004, both of which are hereby incorporated by reference for all purposes.

### FIELD OF THE INVENTION

The present invention relates to a reinforced member formed by applying an absorbent medium to a member and forming the absorbent medium into a reinforcing matrix.

### BACKGROUND OF THE INVENTION

It is generally known to apply a material (e.g., a synthetic or natural material) to a member of an article of manufacture for imparting, strength, acoustic damping characteristics or the like to the article. Such materials are frequently used in articles such as buildings, containers, transportation vehicles (e.g., automotive vehicles) or the like. Such materials, however, can present difficulties. For example, the materials may be costly, can be difficult to form, can cause substantial amounts of waste, can interfere with assembly processes or the like. Thus, there is a need for providing a material that imparts reinforcement, acoustic damping or the like to a member wherein the material or its method of forming overcomes one or more of aforementioned difficulties or other difficulties of prior reinforcing materials.

### SUMMARY OF THE INVENTION

The present invention is directed to a method of reinforcing a member of an article of manufacture and a reinforced member formed thereby. The reinforced member typically includes a member such as a panel or other member of an article of manufacture (e.g., an automotive vehicle) and a reinforcing matrix material disposed thereon. The matrix material is typically formed by absorbing a liquid material (e.g., an e-coat material) into the absorbent medium followed by curing the liquid material to form the matrix.

### BRIEF DESCRIPTION OF THE DRAWINGS

The features and inventive aspects of the present invention will become more apparent upon reading the following detailed description, claims, and drawings, of which the following is a brief description:
Fig. 1 is a perspective view of an absorbent medium being applied to a member according one exemplary aspect of the present invention; and
Fig. 2 is a perspective view of an exemplary reinforced member formed in accordance with an exemplary aspect of the present invention.
Fig. 3A-3C is a pair of side views and perspective view of a fastener according to an aspect of the present invention.

### DETAILED DESCRIPTION OF THE INVENTION

The present invention is predicated upon providing a process for forming a reinforced member for an article of manufacture by applying an absorbent medium to a member and forming the absorbent medium into a matrix material for reinforcing the member. As used herein, reinforced can mean reinforced against many different types of forces such as vibrational forces (e.g., the member can be reinforced by being damped), impact forces, combinations thereof or the like. It is contemplated that a variety of members of a variety of articles of manufacture may be reinforced according the present invention. Examples of articles, which may benefit from the present invention include buildings, appliances, furniture or the like. It has been found, however, that the present invention is particularly suitable for forming reinforced members for transportation vehicles such as boats, trains and automotive vehicles.

The method of reinforcing a member of an article of manufacture typically includes the following steps, which are not necessarily in chronological order:
i) applying an absorbent medium to the member of an article of manufacture;
ii) absorbing a liquid material into the absorbent medium; and
iii) curing the liquid material for forming a relatively rigid matrix material adhered to a surface of the member of the article of manufacture.

As suggested, a variety of types of members may be reinforced according to the present invention. For example, a member for reinforcement may be a panel, a tube, a cylindrical member, a structure defining a cavity, a hollow member, a solid member, a combination thereof or the like. Moreover, a variety of members of automotive vehicles may be reinforced according to the present invention. For example, members of the vehicle suitable for reinforcement can include body members (e.g., inner and outer body panels), frame members, engine members, bumpers, pillars, closure panels, combinations thereof or any other members of the vehicle. Various additional members suitable for application of absorbent medium followed by e-coat include metal stampings, electronic housings, door hardware, marine hardware, bicycle parts, patio furniture, aluminum die castings, plumbing hardware, lighting fixtures or the like. In one preferred embodiment, however, the member is a part of an automotive vehicle.

For reinforcing a member, an absorbent medium may be applied directly to a member of an article of manufacture. Alternatively, the absorbent medium may be applied to a carrier member followed by application of the carrier member and the absorbent medium to a member of the article of manufacture. When absorbent medium is applied to a carrier member, the carrier member and absorbent medium are typically inserted within a cavity defined by the member (e.g., a pillar structure of an automotive vehicle) to be reinforced, although not required. Examples of carrier members are disclosed in U.S. Patent 6,619,727, which is incorporated herein by reference for all purposes.

Application of the absorbent medium directly to a member of an article of manufacture typically includes attaching the absorbent medium to the member of the article of manufacture. The absorbent medium may be attached to the member using a variety of techniques and a variety of fastening mechanisms. For example, the absorbent medium may be attached to a member with mechanical fasteners (e.g., screws, arrowhead fasteners, clips, snap-fits, interference fit fasteners, combinations thereof or the like). Alternatively, the absorbent medium may be attached to a member with an adhesive, a magnet, a combination thereof or the like. It should be understood that any of the fastening mechanisms discussed herein may be formed integrally with the member, the absorbent medium or both or may be applied as a separate component. Moreover, it should be understood that the absorbent medium may natural attach itself to a member, for instance, the medium may be interference fit into a cavity of a structure such as a vehicle pillar.

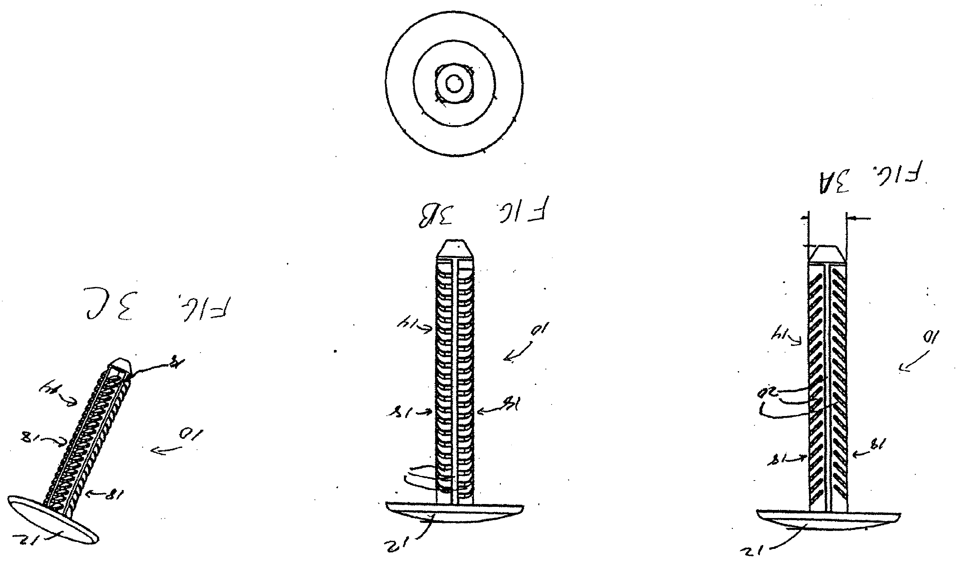

One example of a potential fastener 10 is illustrated in Fig. 3A-3C. As can be seen the fastener 10 includes a cap 12 at a proximate end of the fastener 10 and a shank 14 extending therefrom. The shank 14 is divided into a plurality (e.g., three or four) of sections 18 by a plurality (e.g., two, three or four) of dividing walls 20. Moreover, each of the sections 18 includes a plurality of flanges 24 that extend at an angle relative to the shank 14 to extend at least partially toward the cap 12 or proximate end. Preferably, although not required, the flanges 24 in one section are staggered relative to the flanges 24 in one or both adjacent or adjoining sections.

The absorbent medium can be selected from several different materials. Examples of suitable materials include fabrics, fibrous materials, sponge materials, hemp, steel wool, polymeric fibers, glass fibers, natural fibers (e.g., coconut fibers, kenaf plant fibers, combinations thereof or the like), paper fibers, animal hair, combinations thereof or the like. In one embodiment, the absorbent medium is formed of several strands that are woven or otherwise intertwined either randomly or according to one or more patterns. The strands may be formed of a variety of materials such that the strands may be polymeric strands, metallic strands, fibrous strands, combinations thereof or the like.

In one highly preferred embodiment, the absorbent medium is electrically conductive and/or capable of being electrically charged (e.g., the absorbent medium may be relatively polar), although not required. Accordingly, one preferred material for the absorbent medium (e.g., the strands of the absorbent medium) is a conductive material such as a metal or a polymeric material that includes an electrically conductive filler material such as graphite, metal, carbon black, combinations thereof or the like. Exemplary conductive materials can exhibit electrical resistivity that is less than about 10 ohm-cm, less than 10⁻¹ ohm-cm, less than 10⁻² ohm-cm and even less than 10⁻⁴ ohm-cm. Of course, for non-conductive materials, the resistivity may be substantially higher.

The absorbent medium can also be particularly porous such that it is internally comprised of a large amount of open space. As examples, the absorbent medium can be porous and include at least about 50%, at least about 70% and even at least about 90% open space by volume. Of course, it is contemplated that lower percentages of open space may also be within the scope of the present invention.

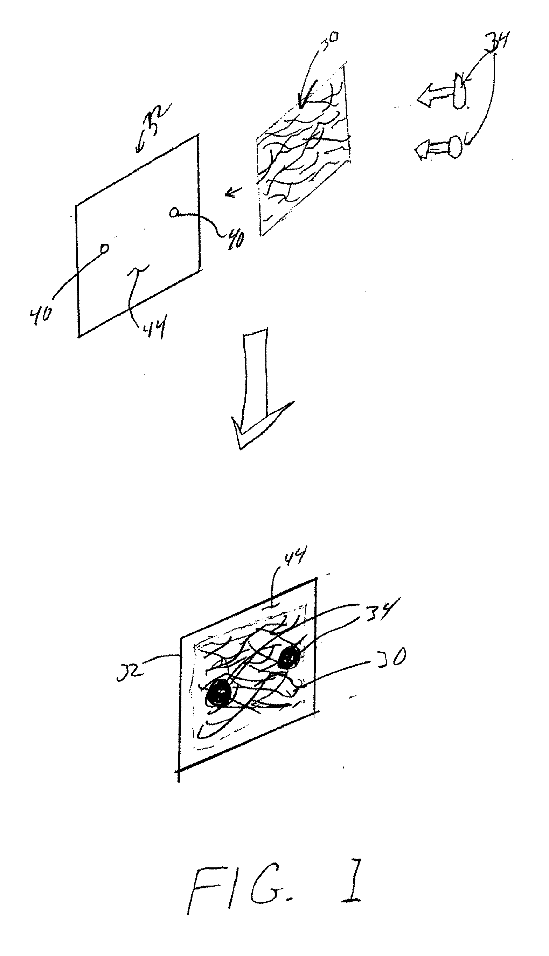

Referring to Fig. 1, there is illustrated an exemplary method of applying an absorbent medium (e.g., directly) to a member. As can be seen, a layer 30 of absorbent medium being attached to a member 32 of an automotive vehicle with a plurality of mechanical fasteners 34. The particular member 32 illustrated is a metal panel (e.g., an inner or outer body panel) of a vehicle, but may be any of the members discussed herein. As can be seen, the fasteners 34 are extended through the layer 30 of absorbent medium and through openings 40 in the member 32 for interference fitting the fasteners 34 to the member 32 thereby attaching the layer 30 of absorbent medium to the member 32. As shown, the layer 30 is attached to overlay and/or be in a coextensive relationship with a substantial portion of a surface 44 of the member 32.

As suggested, a liquid material is typically absorbed into the absorbent medium such that the liquid material can be cured for forming a reinforcing matrix. As used herein, liquid material is intended to encompass materials that are substantially entirely liquid as well as materials that are partially liquid such as a slurry.

Generally, it is contemplated that the liquid material may be absorbed into the absorbent medium before or after application of the absorbent medium to a member. Moreover, it is contemplated that the liquid material may be absorbed into the absorbent medium before or after assembly of the member (i.e., the member to which the absorbent medium is applied) to its article of manufacture.

The liquid material may be selected from a variety of materials. Generally. it is desirable for the liquid material to be adhesive toward the absorbent medium, the member being reinforced or both. Exemplary liquid materials can include polymeric materials such as polyurethanes, certain epoxy materials, acetates, acrylates, glycols, alcohols (e.g., propanols), combinations thereof or the like. It should be recognized that the skilled artisan will be able to think of a variety of additional materials suitable for use in the present invention.

In one embodiment, the liquid material is a coating material that is designed to prevent corrosion of a member of an article of manufacture. For a variety of applications, the liquid material is an e-coat material or electrically applied paint coating (e.g., also known as electrocoating, electronic coating, electronic painting, electrophoretic coating or as other names) material. In one or more embodiments, this e-coat material may include a urethane, an epoxy, a combination thereof or the like, however, such materials may also be absent from the e-coat material.

Thus, according to one preferred embodiment and with reference to Fig. 1, the member 32 along with the absorbent medium 30 are assembled to an automotive vehicle. Thereafter the vehicle is immersed in an e-coat paint bath of e-coat material and a first electrical charge (either positive or negative) is applied to the vehicle and therefore to the member 32 and the absorbent medium 30, if capable of being charged. At the same time, a second electrical charge, opposite the first electrical charge, is applied to the e-coat paint bath. In turn, the member 32 and the absorbent medium 30, again if capable of being charged, attract the oppositely-charged paint particles thereby absorbing or plating the e-coat material into the absorbent medium 30 and coating the member 32, the medium 30 or both.

Even when the absorbent medium is not particularly electrically conductive or capable of being charged, the e-coat material or other liquid material should still typically be absorbed into the absorbent medium. As such, it is contemplated that the absorbent medium may include one or more additives that make it susceptible to receipt of e-coat or other liquid material. Moreover, the absorbent medium may be formed of a material that is naturally susceptible to receipt of e-coat or other liquid material. Thus, during absorption of the liquid material (e.g., the e-coat material) and regardless of the conductivity of the absorption material, the liquid material will typically wet and coat both absorbent medium, the member or both.

For reinforcing the member, the absorbed liquid material is preferably cured to form the absorbent medium into a reinforcing matrix material. Although it is contemplated that curing may occur before application of the matrix material to the member to be reinforced, it is preferable that the liquid material cure, adhere or both to the member and the absorbent medium at substantially the same time. It is also preferable that a portion of the liquid material cure and adhere to the absorbent medium to form the matrix material and that a portion of the liquid material cure and adhere to the member and the absorbent medium thereby adhering the absorbent medium to the member.

For assisting in adhesion to the member, the absorbent medium or both, it may be desirable for the liquid material or the e-coat material to include an adhesion promoter. For example and without limitation, the e-coat material can include an epoxy material, a urethane material or another adhesive material. Other exemplary materials include without limitation liquid polymer resins, ceramic slurries, polyolefins (e.g., chlorinated polyolefins).

Curing of the liquid material may be induced by a variety of stimuli such as chemical reaction, exposure to heat, exposure to moisture, exposure to radiation, combinations thereof or the like. Upon curing, the liquid material typically forms a relatively rigid solid material coating the absorbent medium (e.g. the strands of the absorbent medium) and at least a portion and more preferably a substantial portion of the member being reinforced.

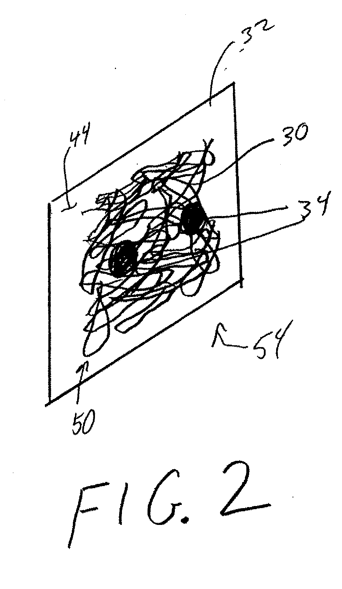

In instances where the liquid material is an e-coat material, and referring to Fig. 2, the automotive vehicle or other article of manufacture are placed in a curing oven for heating the e-coat material to cure. In turn, at least a portion the e-coat material cures and adheres to the absorbent medium to form a matrix material 50 and at least a portion of the e-coat material cures and adheres to the member 32 and the absorbent medium 30 thereby adhering the absorbent medium 30, the matrix material 50 or both to the member 32, which, in turn, creates a reinforced member 54.

Advantageously, forming a matrix material upon a member using an absorbent medium according to the present invention can improve characteristics such as strength, impact resistance, vibration resistance, combinations thereof or the like. Moreover, in particular embodiments, such characteristics can be improved at costs that are lower than using other reinforcement techniques.

Unless stated otherwise, dimensions and geometries of the various structures depicted herein are not intended to be restrictive of the invention, and other dimensions or geometries are possible. Plural structural components can be provided by a single integrated structure. Alternatively, a single integrated structure might be divided into separate plural components. In addition, while a feature of the present invention may have been described in the context of only one of the illustrated embodiments, such feature may be combined with one or more other features of other embodiments, for any given application. It will also be appreciated from the above that the fabrication of the unique structures herein and the operation thereof also constitute methods in accordance with the present invention.

The preferred embodiment of the present invention has been disclosed. A person of ordinary skill in the art would realize however, that certain modifications would come within the teachings of this invention. Therefore, the following claims should be studied to determine the true scope and content of the invention.

## Claims

1. A method of reinforcing a member of an article of manufacture, the method comprising:
applying an absorbent medium to the member of the article of manufacture;
absorbing a liquid material into the absorbent medium; and
curing the liquid material for forming a relatively rigid matrix material adhered to a surface of the member of the article of manufacture.

2. A method as in claim 1 wherein the step of applying the absorbent medium includes at least one of the following:
layering the absorbent medium over a surface of the member and attaching the medium to the member with one or more fasteners;
adhering the absorbent medium to a surface of the member; or
attaching the medium to a carrier member and placing the carrier member adjacent the member of the article of manufacture.

3. A method as in claim 1 or 2 wherein the step of absorbing the liquid material includes absorbing at least one of an e-coat material or another corrosion inhibiting material.

4. A method as in claim 1, 2 or 3 wherein the absorbent medium is comprised of several strands of material that are woven or otherwise intertwined together.

5. A method as in claim 4 wherein the material for the several strands is selected from the group comprising metal fibers, polymeric fibers, natural fibers or combinations thereof.

6. A method as in claim 5 wherein the material for the several strands has an electrical resistivity that is less than about 10⁻¹ ohm-cm.

7. A method as in any of claims 1-6 wherein the absorbent medium is a polymeric material that includes a conductive filler.

8. A method as in any of claims 1-7 wherein the member is a body panel of an automotive vehicle and wherein the absorbent medium is formed as a layer and application of the absorbent medium to the panel includes overlaying the absorbent medium in a coextensive relationship over a substantial portion of a surface of the panel.

9. A method as in claim 8 wherein the step of absorbing a liquid material into the absorbent medium includes submerging the panel and the absorbent medium into an e-coat bath wherein a first electrical charge is applied to the bath and second opposite electrical charge is applied to the absorbent medium.

10. A method as in any of claims 1-9 wherein the step of curing the liquid material includes applying heat to the liquid material in an e-coat oven.

11. A method as in any of claims 1-10 wherein the absorbent medium is at least about 70% open space by volume.

12. A method as in any of claims 1-11 wherein the e-coat material includes an epoxy.
